# EUROPÄISCHE PATENTSCHRIFT

(11) **EP 3 074 736 B1**
(45) Veröffentlichungstag und Bekanntmachung des Hinweises auf die Patenterteilung: **04.04.2018**
(21) Anmeldenummer: 14803041.4
(22) Anmeldetag: 18.10.2014
(51) Int. Cl.: G01G 21/28

(54) **WÄGERAUMBODEN UND WINDSCHUTZ FÜR EINE PRÄZISIONSWAAGE SOWIE PRÄZISIONSWAAGE**
WEIGHING-CHAMBER BASE AND DRAUGHT SHIELD FOR A PRECISION BALANCE, AND PRECISION BALANCE
FOND D'UNE CHAMBRE DE PESÉE, PARAVENT DESTINÉ À UNE BALANCE DE PRÉCISION, ET BALANCE DE PRÉCISION

(30) Priorität: 25.11.2013 DE 102013113003
(43) Veröffentlichungstag der Anmeldung: 05.10.2016
(73) Patentinhaber: Sartorius Lab Instruments GmbH & Co. KG, 37079 Göttingen (DE)
(72) Erfinder: KUHLMANN, Otto, 37085 Göttingen (DE); LAUBSTEIN, Michael, 37077 Göttingen (DE); VON STEUBEN, Jan, 37075 Göttingen (DE)
(74) Vertreter: Prinz & Partner mbB
(86) Internationale Anmeldenummer: PCT/EP2014/002814
(87) Internationale Veröffentlichungsnummer: WO 2015/074734

(56) Entgegenhaltungen:
- EP-A1- 2 088 406
- WO-A1-2005/003697
- DE-A1- 19 849 399

## Beschreibung

Die Erfindung betrifft einen Wägeraumboden für eine Präzisionswaage sowie einen Windschutz für eine Präzisionswaage mit einem solchen Wägeraumboden.

Es ist allgemein bekannt, an einer Präzisionswaage einen Windschutz anzubringen, der einen Raum oberhalb der Waagschale der Präzisionswaage umgibt. Der Windschutz hat die Aufgabe eine Beeinträchtigung des Wiegevorgangs durch äußere Einflüsse zu verhindern, beispielsweise Luftbewegungen, elektrostatische Anziehungskräfte oder Wärmestrahlung. Um einen zu wiegenden Gegenstand auf die Waagschale legen zu können, weist ein solcher Windschutz eine Seitenscheibe auf, die zwischen einer geschlossenen und einer geöffneten Stellung verschoben werden kann. Zur Reinigung des Windschutzes oder um einen ungehinderten Zugang zur Waagschale zu erhalten, ist es aus dem Stand der Technik bekannt, dass die Seitenscheiben und eine Frontscheibe sowie ein Deckel des Windschutzes vollständig demontierbar sind. Um den Wägeraum der Präzisionswaage vollständig reinigen zu können, ist es aber auch wünschenswert, den Wägeraumboden entfernen zu können, um diesen einfach zu reinigen. Darüber hinaus soll der Wägeraumboden so ausgebildet sein, dass Flüssigkeiten oder Fremdkörper, die auf den Wägeraumboden gelangen, nicht zur unter dem Wägeraumboden angeordneten Wägetechnik gelangen und diese beschädigen können.

Aus der DE 103 55 106 A1 ist ein demontierbarer Windschutz bekannt, dessen Wände mit einem elektrisch leitfähigen Material beschichtet und über elektrisch leitfähige Verbindungsmittel miteinander verbunden sind, so dass elektrostatische Aufladungen abgeleitet werden können.

Aus der DE 10 2009 055 622 A1 ist ein Windschutz bekannt, dessen Wägeraumboden thermisch leitend mit einem thermoelektrischen Modul verbunden ist. Hierdurch werden unerwünschte Luftströmungen im Wägeraum vermieden.

Aus der WO 2005/003697 A1 ist eine Waage bekannt, die einen lose auf dem Waagengehäuse positionierbaren Windschutz aufweist.

Aus der DE 198 49 399 A1 ist eine Waage mit einem Windschutz bekannt, der über eine Verriegelungseinrichtung am Waagengehäuse befestigt wird.

Aus der EP 2 088 406 A1 ist eine Waage mit einem Windschutz bekannt, der über eine formschlüssige Verbindung mit Hilfe einer Befestigungseinrichtung am Waagengehäuse befestigt wird.

Aufgabe der Erfindung ist es, einen Wägeraumboden für eine Präzisionswaage bereitzustellen, der einfach zu montieren und zu demontieren ist und gleichzeitig einen zuverlässigen Schutz für die Wägetechnik bereitstellt. Aufgabe der Erfindung ist es des Weiteren, einen Windschutz für eine Präzisionswaage bereitzustellen, der vollständig, einfach und werkzeuglos zu demontieren ist und mit dem eventuelle Verschmutzungen mit geringem Aufwand rückstandsfrei entfernt werden können.

Zur Lösung der Aufgabe ist ein Wägeraumboden für einen Windschutz einer Präzisionswaage, der einen Wägebodenabschnitt sowie zwei senkrecht am Wägebodenabschnitt angeordnete, an gegenüberliegenden Rändern des Wägebodenabschnitts angeordnete Seitenwangen aufweist, die sich außerhalb des Windschutzes befinden und an denen Befestigungsvorrichtungen vorgesehen sind, die als Rastelemente ausgeführt und auf einander zugewandten Innenflächen der Seitenwangen vorgesehen sind.

Der Wägeraumboden ist also seitlich über den Wägebereich bzw. die Waagschale hinaus verlängert bzw. ragt über diese hinaus, vorzugsweise bis zu den Seitenwänden der Präzisionswaage. Flüssigkeiten, die von der Waagschale auf den Wägebodenabschnitt gelangen, können somit nicht von diesem zur Wägetechnik gelangen, sondern fließen seitlich am Gehäuse herunter. Durch die Seitenwangen kann der Wägeraumboden zudem auf einfache Weise an der Präzisionswaage befestigt werden, beispielsweise an den Seitenwänden, indem die Seitenwangen die Seitenwände außenseitig umgreifen. Da die Seitenwangen so einfach von außen zugänglich sind, ist eine einfache Demontage möglich. Die Seitenwangen mit den Rastelementen können beispielsweise am Gehäuse der Präzisionswaage verrasten, sodass der Wägeraumboden zuverlässig an der Präzisionswaage gehalten ist. Rastelemente bieten zudem den Vorteil, dass eine einfache, werkzeuglose Demontage möglich ist, indem die Seitenwangen seitlich vom Gehäuse der Präsizionswaage weg gezogen werden, wodurch die Rastelemente vom Gehäuse gelöst werden. Die Seitenwangen sind so ausgebildet, dass diese einen Abschnitt des Gehäuses umgreifen, beispielsweise die Seitenwände. Zum Lösen des Wägeraumbodens können die Seitenwangen seitlich vom Gehäuse abgehoben werden, wobei die nach innen gerichteten Befestigungsvorrichtungen auf einfache Weise gelöst werden können. In montiertem Zustand werden die Befestigungsvorrichtungen durch die Seitenwangen gegeneinander gedrückt, sodass diese zuverlässig fixiert sind.

Der Wägebodenabschnitt kann beispielsweise eine Durchtrittsöffnung für eine Wägetechnik aufweisen, die von einem Gehäuseabschnitt unterhalb des Wägeraumbodens nach oben ragt, sodass eine Waagschale auf der Wägetechnik befestigt werden kann.

Um zu verhindern, dass Flüssigkeiten oder Verschmutzungen, die sich auf den Wägebodenabschnitt befinden, durch die Durchtrittsöffnung zur Wägetechnik gelangen können, ist der Wägebodenabschnitt im Bereich der Durchtrittsöffnung erhöht.

Des Weiteren kann auch der Rand des Wägebodenabschnitts zumindest abschnittsweise erhöht, um zu verhindern, dass Flüssigkeiten oder Verschmutzungen, die auf den Wägebodenabschnitt gelangt sind, von der Präzisionswaage heruntertropfen oder wegfließen können. Flüssigkeiten und Verschmutzungen können so auf dem Wägebodenabschnitt gesammelt werden und dieser nach dem Wiegevorgang durch Abheben des Wägeraumbodens vollständig von der Präzisionswaage entfernt werden, ohne dass Flüssigkeiten vom Wägeraumboden heruntertropfen.

Die Seitenwangen des Wägeraumbodens bilden beispielsweise zumindest abschnittsweise eine Seitenwand des Gehäuses der Präzisionswaage. Zudem ist es möglich, dass an zumindest einer Seitenwange eine Anschlagfläche und/oder eine Führung für eine verschiebbare Seitenscheibe vorgesehen ist. Somit muss am Gehäuse keine zusätzliche Führung für die Seitenscheibe vorgesehen sein.

Die Anschlagfläche und/oder die Führung können zumindest abschnittsweise durch eine senkrecht zum Wägebodenabschnitt stehende Fläche der Seitenwange gebildet sein. In einer bevorzugten Ausführungsform kann die gesamte Seitenwange die Anschlagfläche und/oder die Führung bilden. Es ist aber auch möglich, dass an der Seitenwange ein Absatz oder eine Kante vorgesehen ist, durch die die Anschlagfläche oder die Führung gebildet sind.

Vorzugsweise ist der Wägeraumboden einstückig aus Kunststoff hergestellt, sodass dieser keine zusätzlichen Spalten oder Kanten aufweist, an welchen sich Flüssigkeiten sammeln können.

Zur Lösung der Aufgabe ist des Weiteren ein Windschutz für eine Präzisionswaage vorgesehen, mit einem erfindungsgemäßen Wägeraumboden und mit zumindest einer Seitenscheibe, die zwischen einer geöffneten Stellung und einer geschlossenen Stellung verschiebbar ist, wobei die Seitenwangen des Wägeraumbodens einen Abschnitt der Seitenwände des Windschutzes bilden.

Die Seitenscheibe kann dicht an einer Führung oder einer Anschlagfläche anliegen, die an der Seitenwange vorgesehen ist. Dieser Aufbau ermöglicht eine einfache Demontage der Seitenscheiben, da diese lediglich an der oben angeordneten Führungsschiene fest gelagert ist. Die Seitenscheibe kann also einfach nach oben abgezogen werden bzw. einfach in die Führungsschiene eingehängt werden und mit dem unteren Rand gegen die Anschlagfläche oder die Führung bewegt werden.

Der Windschutz weist beispielsweise eine Führungsschiene für die Seitenscheibe auf, wobei die Seitenscheibe mit einem oberen Rand in der Führungsschiene gelagert ist und mit einem unteren Rand am Wägeraumboden, an einer Führung oder einer Anschlagfläche, dicht anliegt.

Die Anschlagfläche oder die Führung steht vorzugsweise in einer Draufsicht auf die Führungsschiene vor, sodass die Seitenscheibe durch die Schwerkraft um die Führungsschiene gekippt und gegen die Anschlagfläche oder die Führung gedrückt wird.

Erfindungsgemäß ist des Weiteren eine Präzisionswaage vorgesehen, mit einem Gehäuse und einem erfindungsgemäßen Wägeraumboden oder einem erfindungsgemäßen Windschutz, wobei die Seitenwangen des Wägeraumbodens einen Abschnitt der Seitenwände des Gehäuses bilden. Der Wägeraumboden erstreckt sich also über die gesamte Breite des Gehäuses und umgreift dieses gewissermaßen außenseitig, sodass zwischen Wägeraumboden und Gehäuse keine Flüssigkeit in das Gehäuse eindringen kann.

Weitere Vorteile und Merkmale finden sich in der nachfolgenden Beschreibung in Verbindung mit den beigefügten Zeichnungen. In diesen zeigen:
- Figur 1 in einer perspektivischen Ansicht eine Waage mit einem erfindungsgemäßen Windschutz,
- Figur 2 die Waage aus Figur 1 mit den Seitenscheiben in der geöffneten Stellung und entfernter Frontscheibe,
- Figur 3 eine perspektivische Ansicht der Waage aus Figur 1 mit teilweise geöffnetem Deckel,
- Figur 4 den Windschutz aus Figur 3 aus einer zweiten Perspektive,
- Figur 5 in einer perspektivischen Ansicht einen Trägerrahmen eines Deckels des Windschutzes aus Figur 1 mit Führungsschienen einer erfindungsgemäßen Hängeführung,
- Figur 6 in einer perspektivischen Unteransicht ein Abdeckelement für eine erfindungsgemäße Hängeführung,
- Figur 7 eine Seitenansicht der Waage aus Figur 1, die im Bereich der Hängeführung und des Deckels teilgeschnitten ist,
- Figur 7a eine Teilansicht der Waage aus Figur 7 im Bereich der Hängeführung und des Deckels,
- Figur 8 in einer perspektivischen Ansicht eine Seitenscheibe der Waage aus Figur 1 mit einer Haltevorrichtung einer erfindungsgemäßen Hängeführung,
- Figur 9 die Haltevorrichtung aus Figur 8 in einer Detailansicht,
- Figur 10 die Haltevorrichtung aus Figur 8 in einer Detailansicht,
- Figur 11 eine Schnittansicht durch die Haltevorrichtung aus Figur 8 im Bereich eines Führungselements,
- Figur 12 eine Schnittansicht durch den Windschutz der Waage aus Figur 1 im Bereich der Seitenscheibe,
- Figur 13 eine Detailansicht der Anlagefläche des Windschutzes der Waage aus Figur 1,
- Figur 14 die Waage aus Figur 1 mit entferntem Abdeckelement,
- Figur 15 in einer perspektivischen Ansicht den Wägeraumboden der Präzisionswaage aus Figur 1,
- Figur 16 eine Rückansicht des Wägeraumbodens aus Figur 15,
- Figur 17 die Präzisionswaage aus Figur 1 mit teilweise demontiertem Wägeraumboden, und
- Figur 18 eine zweite Ansicht der Präzisionswaage aus Figur 17 mit entfernter Frontscheibe.

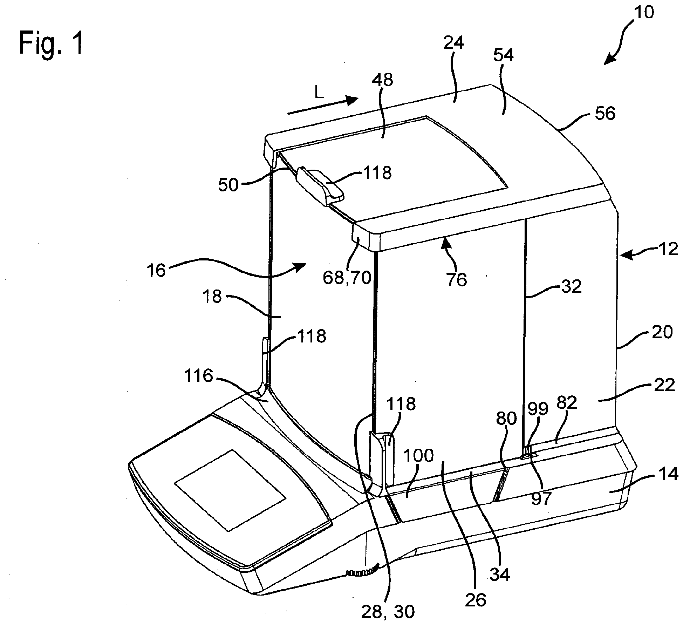

In Figur 1 ist eine Präzisionswaage 10 mit einer Wiegeeinrichtung 14 und einem Windschutz 12 gezeigt. Der Windschutz 12 dient dazu, einen Wägeraum 16 oberhalb der Wiegeeinrichtung 14 zu umgeben und so die Waagschale der Wiegeeinrichtung 14 vor äußeren Einflüssen, beispielsweise Luftbewegungen, elektrostatischen Anziehungskräften oder auch Wärmestrahlung, zu schützen und so eine genaue Messung zu gewährleisten.

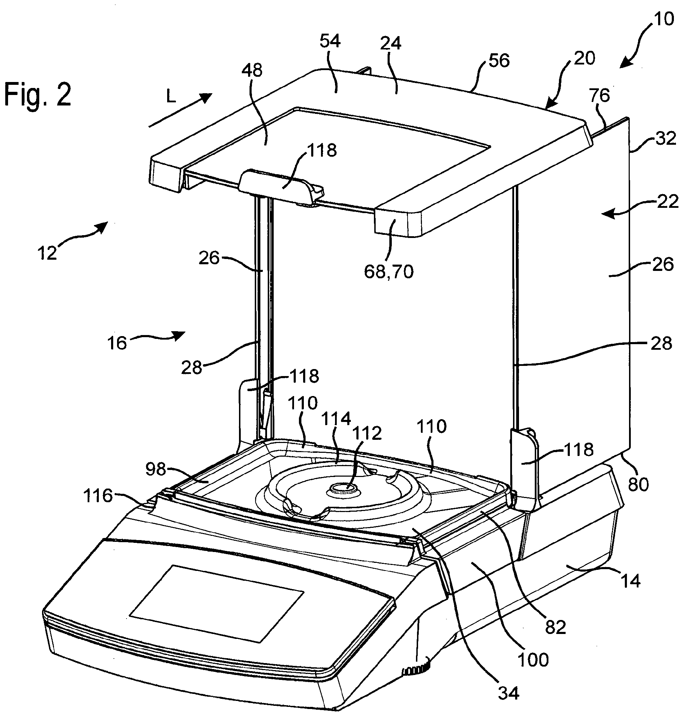

Der Windschutz 12 weist eine Frontscheibe 18, eine Rückwand 20 sowie zwei gegenüberliegende Seitenwände 22 auf. Des Weiteren ist ein Deckel 24 vorgesehen, der den Windschutz 12 nach oben hin abschließt. Die Rückwand 20 ist fest mit der Wiegeeinrichtung 14 verbunden und bildet eine Stütze für den Deckel 24. Die Seitenwände 22 weisen jeweils eine Seitenscheibe 26 auf, die zwischen einer geschlossenen und einer geöffneten Position (Figur 2) verschiebbar sind. Die Seitenscheiben 26 sowie die Frontscheibe 18 erstrecken sich vom Deckel 24 bis zur Wiegeeinrichtung 14.

In der in Figur 1 gezeigten geschlossenen Position liegen die vorderen Ränder 28 der Seitenscheiben 26 an den Seitenrändern 30 der Frontscheibe 18 an. Die hinteren Ränder 32 der Seitenscheiben 26 liegen an den Seitenwänden 22 an. Die Seitenwände 22 sind dicht mit der Rückwand 20 verbunden. Da die Seitenscheiben 26 und die Frontscheibe 18 zudem am Deckel 24 nach oben hin und an der Wiegeeinrichtung 14 nach unten hin abschließen, ist der Wägeraum 16 in der geschlossenen Position der Seitenscheiben 26 vollständig abgeschlossen.

Um den Windschutz 12 bzw. die Präzisionswaage 10 einfach reinigen zu können, sind die Seitenscheiben 26, die Frontscheibe 18, Teile des Deckels 24 sowie der Wägeraumboden 34 demontierbar ausgebildet, wie nachfolgend erläutert wird. Insbesondere können alle Teile ohne Werkzeuge demontiert werden.

Im Folgenden werden die demontierbaren Bauteile des Windschutzes 12 bzw. der Präzisionswaage 10 erläutert.

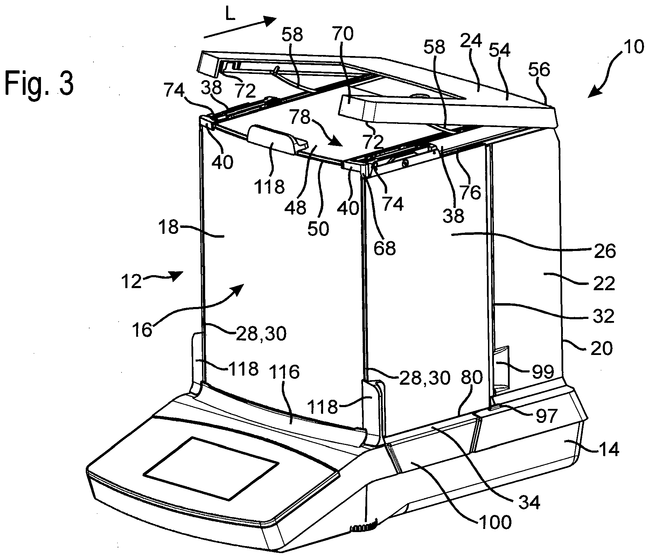

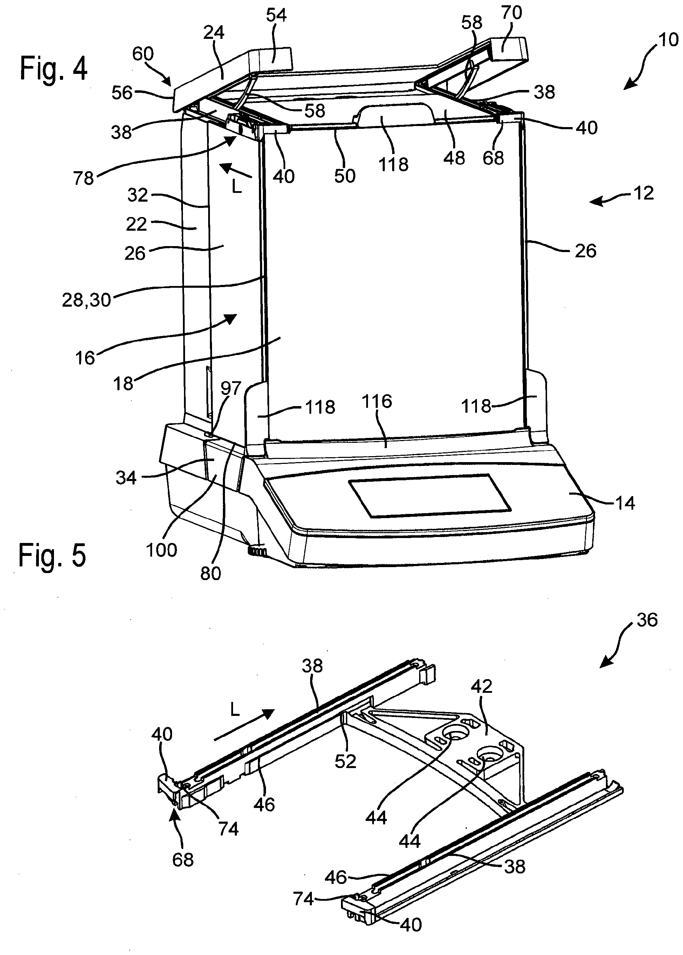

Wie in den Figuren 3 und 4 zu sehen ist, weist der Deckel 24 des Windschutzes 12 einen Trägerrahmen 36 auf, der an der Rückwand 20 gehalten ist. An diesem Trägerrahmen sind Führungsschienen 38 für die Seitenscheiben 26 sowie Halteelemente 40 für die Frontscheibe 18 vorgesehen.

Wie in Figur 5 zu sehen ist, sind die Halteelemente 40 an einem vorderen Ende der Führungsschienen 38 vorgesehen. Die beiden Führungsschienen 38 sind mit einer Haltegeometrie 42 miteinander verbunden. An dieser Haltegeometrie 42 sind Befestigungsöffnungen 44 zur Montage des Trägerrahmens 36 an der Rückwand 20 vorgesehen.

An den einander zugewandten Flächen der Führungsschienen 38 sind des Weiteren in Längsrichtung L der Führungsschienen 38 verlaufende Gleitschienen 46 vorgesehen. Auf diesen Gleitschienen 46 ist eine Deckscheibe 48 (siehe Figuren 3 und 4) gelagert, die in einer geschlossenen Position am oberen Rand 50 der Frontscheibe 18 anliegt. Um einen Zugang zum Wägeraum 16 zu schaffen, kann die Deckscheibe 48 auf den Gleitschienen 46 in Längsrichtung L verschoben werden.

Die Gleitschienen 46 bestehen vorzugsweise aus Kunststoff. Der übrige Trägerrahmen 36 kann aus Metall, beispielsweise Aluminum, oder ebenfalls aus Kunststoff bestehen. Die Deckscheibe 48 besteht beispielsweise aus Glas und hat vorzugsweise eine elektrisch leitende Beschichtung. Durch die Gleitschienen 46 aus Kunststoff ist ein Verkratzen der Deckscheibe 48 zuverlässig verhindert. Um ein elektrostatisches Aufladen der Deckscheibe 48 zu verhindern, sind im hinteren Bereich der Gleitschienen 46 am Trägerrahmen 36 elektrische Leiter 52, beispielsweise Kohlebürsten, vorgesehen, die an der Deckscheibe 48 anliegen und diese elektrisch mit dem Trägerrahmen 36 verbinden.

Um eine elektrische Aufladung des Deckels 24 zu verhindern können alle Teile des Deckels 24 entweder elektrisch leitend ausgebildet oder beschichtet, so dass elektrische Ladungen abgeleitet werden können.

Ebenso können die Frontscheibe 18, die Seitenscheiben 22 sowie alle weiteren Teile des Windschutzes 12 bzw. der Präzisionswaage 10 elektrisch leitend ausgebildet und/oder beschichtet und miteinander elektrisch verbunden sein, so dass eine elektrostatische Aufladung einzelner Teile, insbesondere der Scheibe zuverlässig verhindert ist.

Der Deckel 24 weist des Weiteren ein Abdeckelement 54 auf, das, wie nachfolgend erläutert wird, an einem Rand 56 des Deckels 24, hier dem hinteren Rand 56, zwischen einer Haltestellung (Figur 1) und einer Freigabestellung (Figuren 3 und 4) verschwenkbar ist. Zwischen dem Trägerrahmen 36 und dem Abdeckelement 54 sind Federelemente 58 vorgesehen, die das Abdeckelement 54 in die Freigabestellung beaufschlagen.

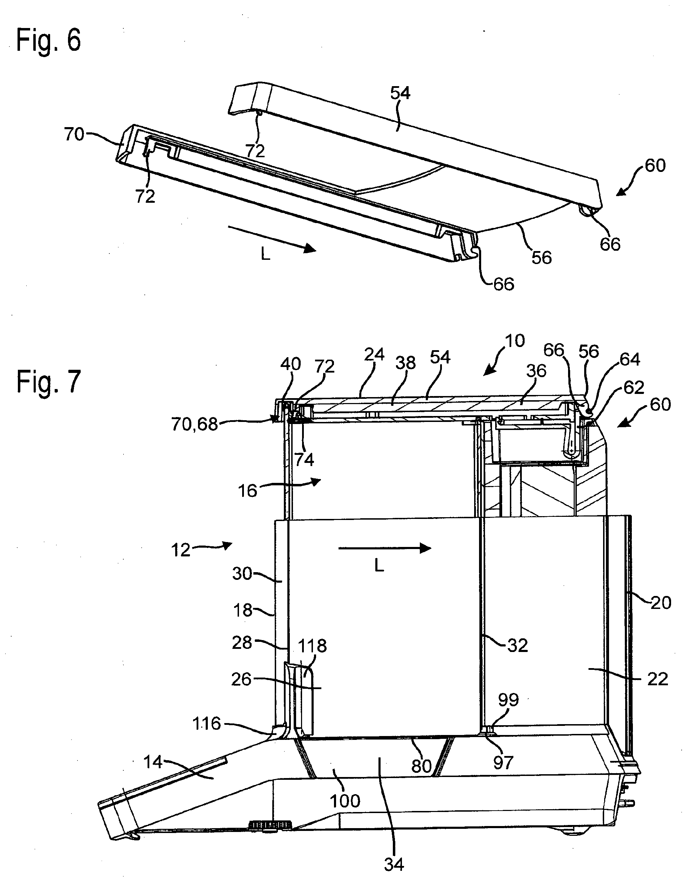

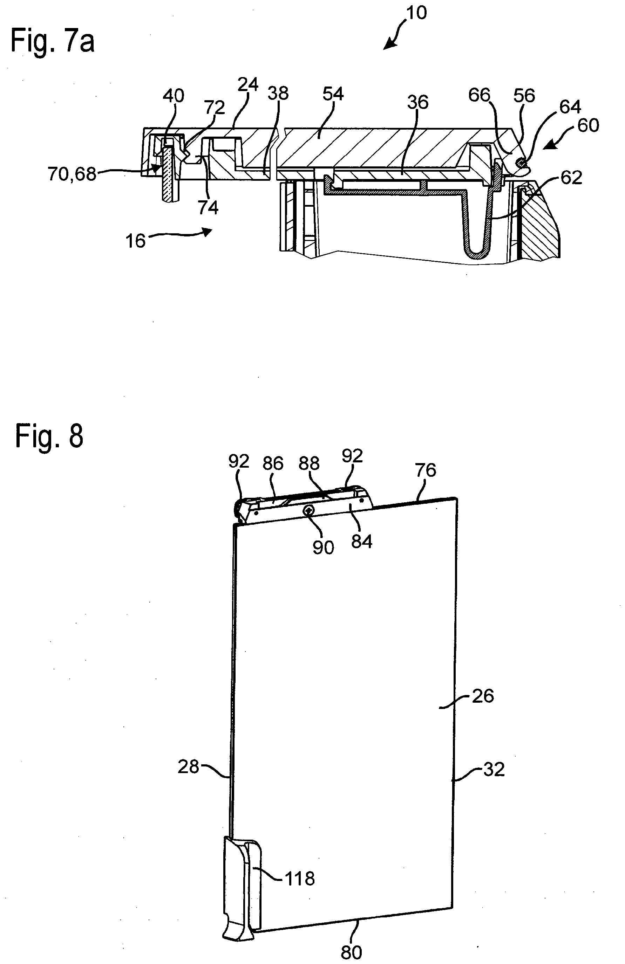

Die Lagerung 60 des Abdeckelements 54 am Trägerrahmen 36 ist durch am Trägerrahmen 36 vorgesehene Lagerungselemente 62 gebildet, die jeweils einen Lagerungsbolzen 64 aufweisen (siehe Figuren 7 und 7a). Die Lagerungselemente 62 sind in Längsrichtung L federnd nachgiebig ausgebildet. Am Abdeckelement 54 sind in Längsrichtung L, also nach hinten, offene Lagerungshaken 66 vorgesehen, die an den Lagerungsbolzen 64 eingreifen können.

Da die Lagerungselemente 62 in Längsrichtung L nachgiebig ausgebildet sind, kann das gesamte Abdeckelement 54 in Richtung zur Lagerung 60 begrenzt verschoben werden, wobei das Abdeckelement durch die federnd nachgebenden Lagerungselemente 62 in Richtung zu einem zweiten Rand 68, hier dem vorderen Rand 68 des Trägerrahmens 36, beaufschlagt wird.

Um den Deckel 24 in der geschlossenen Halteposition (Figur 7) zu halten, sind am an der Lagerung 60 gegenüberliegenden vorderen Rand 70 des Abdeckelements und am vorderen Rand 68 des Trägerrahmens Halteelemente 72, 74 vorgesehen. Die Halteelemente 72, 74 sind so ausgebildet, dass diese das Abdeckelement 54 am vorderen Rand 68 des Trägerrahmens 36 fixieren. Durch Verschieben des Abdeckelements 54 in Längsrichtung L in Richtung zur Lagerung 60 können die Halteelemente 72, 74 gelöst werden.

Wie in Figur 6 zu sehen ist, sind die Halteelemente 74 am Abdeckelement 54 durch von den Lagerungshaken 66 weg gerichtete Rastelemente gebildet. Die am Trägerrahmen 36 vorgesehenen Halteelemente 72 sind durch Rastaufnahmen gebildet, die in Richtung zur Lagerung 60 gerichtet sind. Werden die Rasthaken, also die Halteelemente 74, in Richtung zur Lagerung 60 bewegt, werden diese von den durch die Rastaufnahmen gebildeten Halteelementen 72 gelöst, so dass das Abdeckelement 54 um die Lagerung 60 herum in die Freigabestellung verschwenkt werden kann.

Die Halteelemente 72, 74 werden also beispielsweise durch einen Druck auf den vorderen Rand des Abdeckelements 54 gelöst, durch den das Abdeckelement zur Lagerung 60 verschoben wird. Anschließend wird das Abdeckelement 54 durch die Federelemente 58 in die Freigabestellung bewegt.

Selbst wenn keine Federelemente 58 vorgesehen sind, ist es auf einfache Weise möglich, die Halteelemente 72, 74 zu lösen und das Abdeckelement in die Freigabestellung zu bewegen. Zum Lösen der Halteelemente 72, 74 ist Druck auf den vorderen Rand 70 erforderlich. Nach dem Lösen der Halteelemente muss lediglich die Druckrichtung geändert und leicht nach oben gerichtet werden. In der bevorzugten Ausführungsform ist es möglich, eine nach schräg oben und in Längsrichtung L weisende Druckrichtung zu wählen, durch die eine ausreichende Druckkraft zum Lösen der Halteelemente 72, 74 aufgebracht wird und das Abdeckelement 54 anschließend ohne Änderung der Druckrichtung in die Freigabestellung bewegt wird. Somit kann das Abdeckelement in einer flüssigen Bewegung von der Haltestellung in die Freigabestellung bewegt werden. Ein aufwendiges Lösen der Halteelemente 72, 74 ist nicht erforderlich.

In der in den Figuren 3 und 4 gezeigten Freigabestellung ist es auch möglich, die Deckscheibe 48 werkzeuglos aus dem Trägerrahmen 36 zu entnehmen, indem diese nach oben aus den Gleitschienen 46 entnommen wird.

Des Weiteren können in dieser Freigabestellung, wie nachfolgend erläutert wird, die Seitenscheiben 26 des Windschutzes 12 ebenfalls werkzeuglos entfernt werden.

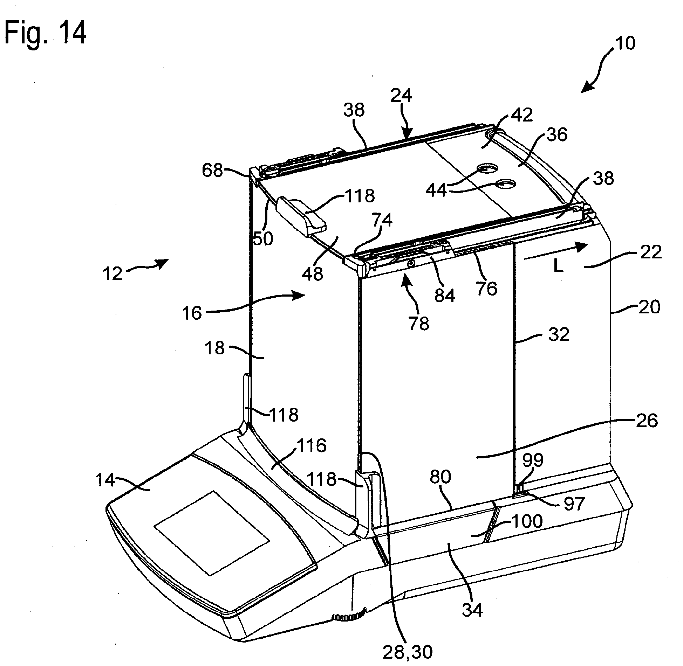

Wie in Figur 14 zu sehen ist, kann das Abdeckelements 54 nach dem Bewegen in die Freigabestellung auch vollständig entfernt werden, so dass eine einfachere Entnahme der Deckscheibe 48 und der Seitenscheiben 26 möglich ist. Diese Entnahme ist möglich, da die Lagerungshaken 66 offen ausgebildet sind, so dass diese einfach von den Lagerungsbolzen 64 gelöst werden können. In der Haltestellung werden die Lagerungshaken 66 dagegen durch die Federvorspannung der Lagerungselemente 62 gegen die Lagerungsbolzen 64 beaufschlagt, so dass ein Lösen nicht möglich ist. Die Lagerungshaken 66 können beispielsweise auch an den Lagerungsbolzen 64 verrasten, um eine zusätzliche Sicherung gegen ein Entfernen des Abdeckelements 54 bereitzustellen.

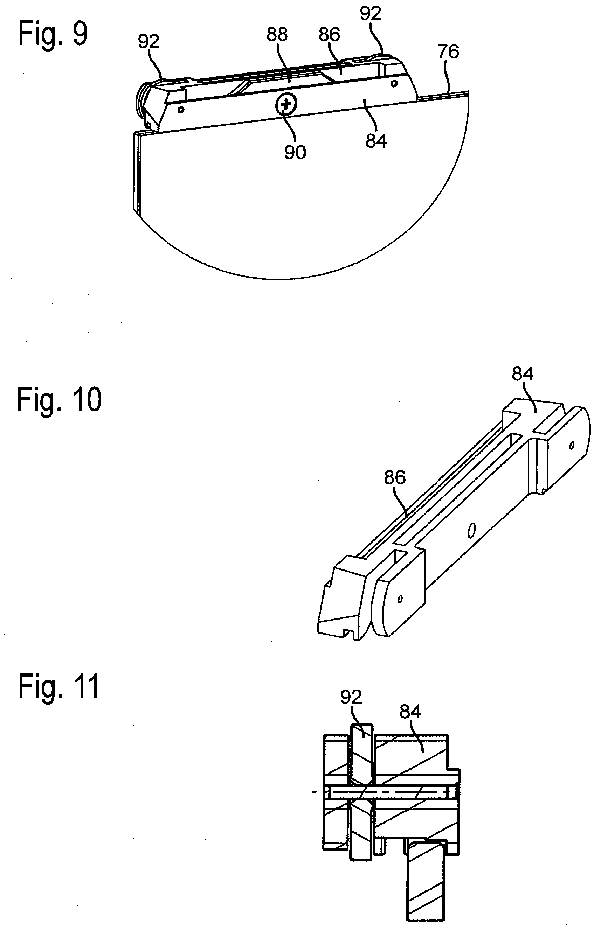

Die Lagerung der Seitenscheiben 26 erfolgt durch eine in den Figuren 8 bis 12 im Detail dargestellte, am oberen Rand 76 der Seitenscheiben 26 angeordnete Hängeführung 78 sowie eine am unteren Rand 80 der Seitenscheiben 26 vorgesehene Anlagefläche 82.

Die Hängeführungen 78 sind jeweils durch eine Führungsschiene 38 des Trägerrahmens 36 sowie durch eine Haltevorrichtung 84 gebildet, an welcher die Seitenscheibe 26 gehalten ist.

Wie in den Figuren 8 bis 11 zu sehen ist, weist die Haltevorrichtung 84 eine Aufnahme 86 für die Seitenscheibe 26 auf. Die Aufnahme 86 ist durch einen Schlitz gebildet, durch den ein Vorsprung 88 der Seitenscheibe 26 geführt ist (Figur 8). Der Vorsprung 88 ist durch eine Schraube 90 an der Aufnahme 86 fixiert. Die Schraube 90 kann die Seitenscheibe gegen die Aufnahme 86 klemmen oder sich durch die Seitenscheibe hindurch erstrecken.

An der Haltevorrichtung 84 sind des Weiteren durch Rollen gebildete Führungselemente 92 vorgesehen, mit welchen die Haltevorrichtung 84 in den Führungsschienen 38 in Längsrichtung L verschiebbar gelagert werden kann.

Die Anlagefläche 82 ist durch eine seitliche Umrandung des Wägeraumbodens 34 gebildet, wobei die Anlagefläche 82 in Längsrichtung L und im Wesentlichen vertikal verläuft.

Die Führungsschienen 38 weisen jeweils eine nach oben offene Nut 94 auf, in die die Führungselemente 92 vertikal von oben eingehängt werden können. Die Baugruppe aus der Haltevorrichtung 84 und der Seitenscheibe 26 kann in diesem montierten Zustand um die Kontaktlinie 96 zwischen Führungsschienen 38 und Führungselementen 92 verschwenkt werden.

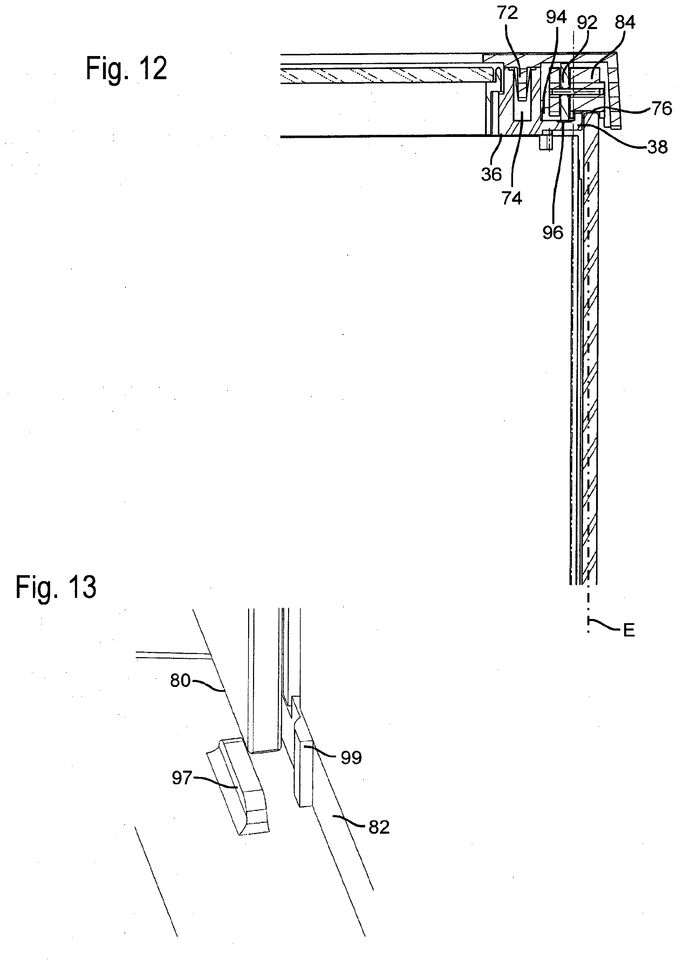

Wie in Figur 12 zu sehen ist, sind die Führungselemente 92 außerhalb der Ebene E angeordnet, die durch die Aufnahme 86 und die Seitenscheibe 26 gebildet ist. Dadurch befindet sich der Schwerpunkt der Baugruppe, die aus der Haltevorrichtung 84 und der Seitenscheibe 26 gebildet ist, bezüglich Figur 12 seitlich versetzt zur Vertikalen durch die Kontaktlinie 96. Aufgrund der Schwerkraft ist diese Baugruppe daher bestrebt, den Schwerpunkt unter die Kontaktlinie 96 zu bewegen. Dadurch wird die Seitenscheibe 26 mit dem unteren Rand 80 gegen die Anlagefläche 82 gedrückt, so dass die Seitenscheibe 26 dicht an der Anlagefläche 82 anliegt.

Da die Anlagefläche 82 in Längsrichtung L verläuft, dient diese zudem als Führung für den unteren Rand 80 der Seitenscheibe 26. Zusätzlich ist an der Anlagefläche 82 ein Führungsfortsatz 97 vorgesehen, der als Sicherung dient, um ein Abheben des unteren Randes 80 der Seitenscheibe 26 von der Anlagefläche 82 zu verhindern. Im regulären Betrieb der Präzisionswaage 10 bzw. des Windschutzes 12 ist dieser Führungsfortsatz 97 aber nicht erforderlich, da die Seitenscheibe 26 durch die Schwerkraft gegen die Anlagefläche 82 gedrückt wird.

Des Weiteren ist an der Seitenfläche 22 ein Rastanschlag 99 vorgesehen, der die Seitenscheibe 26 in der geschlossenen Position hält.

Außer der am oberen Rand 76 der Seitenscheiben 26 angeordneten Hängeführung 78 ist also keine zusätzliche, aufwendige Lagerung am unteren Rand 80 erforderlich.

Da die Führungsschienen 38 durch nach oben offene Nuten 94 gebildet sind, können die Seitenscheiben 26 auf einfache Weise vertikal nach oben aus den Führungsschienen 38 entnommen werden.

Auch die Montage der Seitenscheiben 26 ist vereinfacht, da diese lediglich mit den Haltevorrichtungen 84 bzw. den Führungselementen 92 in die Führungsschienen 38 eingehängt werden müssen. Aufgrund der Schwerkraft gelangen die unteren Ränder 80 selbständig mit den Anlageflächen 82 in Anlage. Eine aufwendige Ausrichtung der unteren Ränder 80 oder ein Einfädeln in eine untere Führung ist nicht erforderlich.

Um die Entnahme der Seitenscheiben 26 im normalen Betrieb des Windschutzes 12 zu verhindern, deckt das Abdeckelement 54 in der Haltestellung die Führungsschienen 38 vertikal nach oben ab. Die Führungselemente 92 können so nicht aus den Führungsschienen entnommen werden. Um die Seitenscheiben 26 entnehmen zu können, ist es erforderlich, das Abdeckelement 54 in die Freigabestellung zu bewegen, in der die Führungsschienen 38 vertikal nach oben geöffnet sind.

Unabhängig von der Ausführung der Haltevorrichtung bzw. der Führungselemente 92 ist es lediglich erforderlich, dass die Führungselemente 92 außerhalb der durch die Seitenscheibe 26 bzw. die Aufnahmen 86 gebildeten Ebene angeordnet sind, so dass die Seitenscheibe um die Kontaktlinie 96 zwischen Führungsschiene 38 und Führungselement 92 gegen die Anlagefläche 82 kippen kann.

Um ein Kippen in der Ebene der Seitenscheiben 26 zu verhindern, können an einer Seitenscheibe 26 auch mehrere Haltevorrichtungen 84 vorgesehen sein.

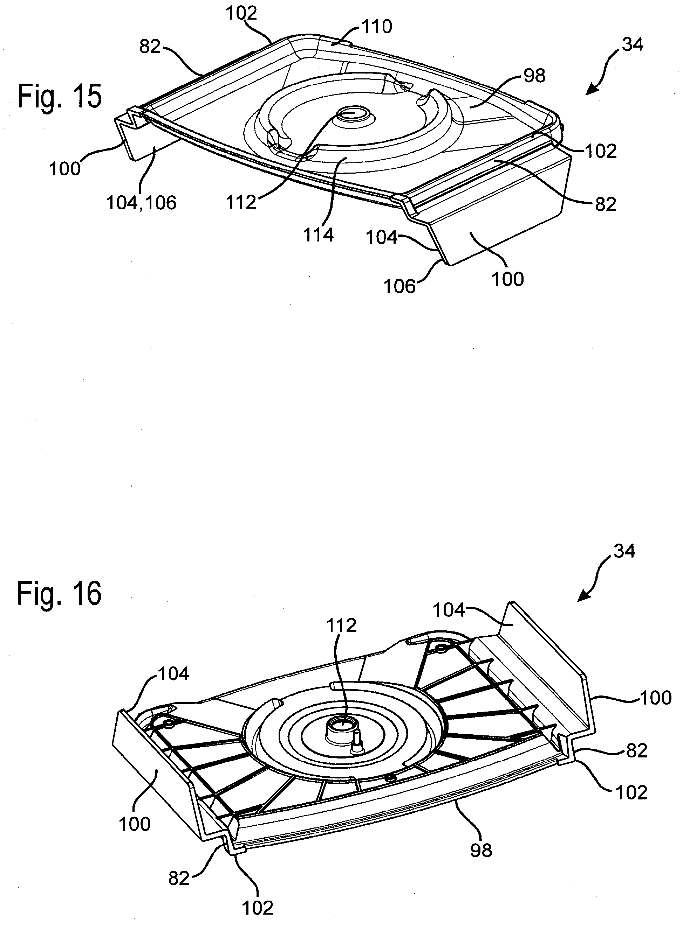

Wie in den Figuren 15 bis 18 zu sehen ist, sind die Anlageflächen 82 am Wägeraumboden 34 der Präzisionswaage 10 angeordnet. Neben dem Deckel 24, den Seitenscheiben 26 und der Frontscheibe 18 ist auch der Wägeraumboden 34 demontierbar ausgeführt, so dass auch dieser zum Reinigen aus der Präzisionswaage 10 entnommen werden kann.

Der Wägeraumboden 34 hat dazu einen Wägebodenabschnitt 98 sowie zwei Seitenwangen 100. Die Seitenwangen 100 befinden sich an gegenüberliegenden Rändern 102 des Wägebodenabschnitts 98 und sind im Wesentlichen senkrecht zum Wägebodenabschnitt 98 und parallel zueinander angeordnet. Dabei liegen die Seitenwangen außerhalb des Windschutzes.

An den einander zugewandten Innenflächen 104 befinden sich Befestigungsvorrichtungen 106, die in dieser Ausführungsform durch Rastelemente gebildet sind. Am Gehäuse der Wiegeeinrichtung 14 sind horizontal verlaufende Rastkanten 108 vorgesehen, an welchen die Befestigungsvorrichtungen 106 eingreifen können.

Der Wägeraumboden 34 wird vertikal von oben auf die Wiegeeinrichtung 14 aufgesetzt, wobei die Seitenwangen 100 das Gehäuse an gegenüberliegenden Seiten umgreifen. Der Wägeraumboden 34 wird auf das Gehäuse aufgeschoben, bis die Befestigungsvorrichtungen 106 an den Rastkanten 108 verrasten. Die Seitenwangen 100 sind federnd nachgiebig ausgebildet, so dass diese beim Aufschieben auf die Rastkanten nachgeben können. Befinden sich die Befestigungsvorrichtungen 106 hinter den Rastkanten, werden die Seitenwangen 100 federnd gegen das Gehäuse gedrückt, so dass die Befestigungsvorrichtungen 106 an den Rastkanten 108 verrasten.

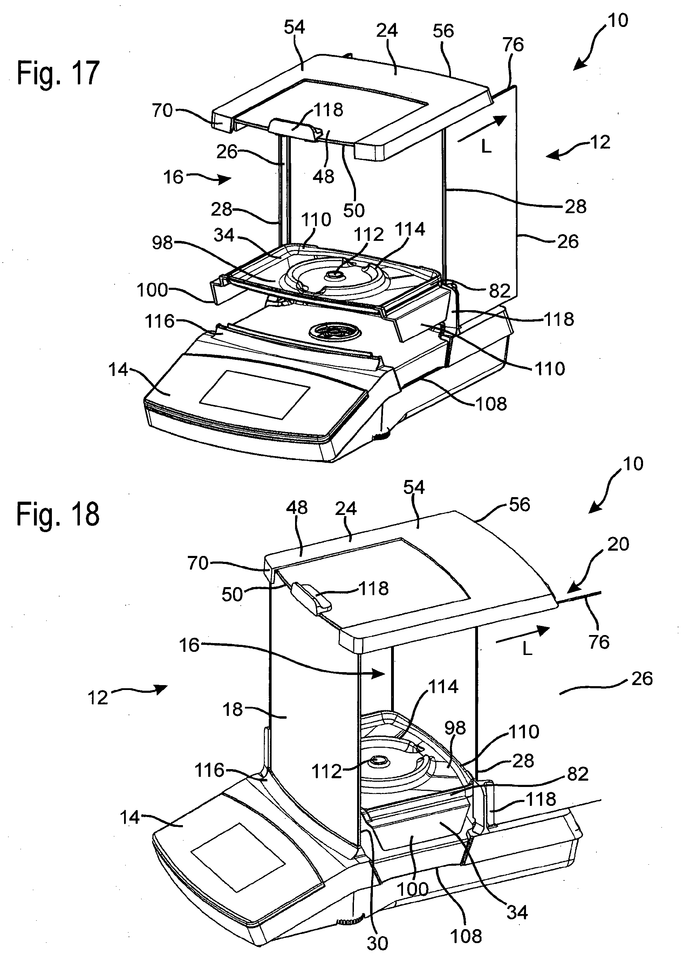

Zur Demontage des Wägeraumbodens 34 werden die Seitenwangen 100 seitlich weggezogen, bis die Befestigungsvorrichtungen 106 von den Rastkanten 108 gelöst sind. Anschließend kann der Wägeraumboden 34 nach oben vom Gehäuse abgezogen werden (Figur 18).

Wie in den Figuren 15 und 17 zu sehen ist, sind die Anlageflächen 82 für die Seitenscheiben 26 jeweils durch einen an den Seitenwangen 100 vorgesehenen Absatz gebildet, auf dem auch der Führungsfortsatz 97 vorgesehen ist. Abhängig von der Form des Gehäuses und des Wägeraumbodens 34 ist ein solcher Absatz aber nicht erforderlich.

Der Wägebodenabschnitt 98 ist im Wesentlichen eben ausgebildet (Figur 15), wobei die umlaufenden Ränder 110 gegenüber dem übrigen Wägebodenabschnitt 98 erhöht sind. Mittig befindet sich eine Durchtrittsöffnung 112 für eine nicht im Detail dargestellte Wägetechnik. Um diese Durchtrittsöffnung 112 ist ebenfalls ein erhöhter Rand 114 ausgebildet.

Die erhöhten Ränder 110, 114 verhindern, dass Flüssigkeiten, die auf den Wägebodenabschnitt 98 gelangt sind, aus dem Wägeraumboden 34 heraus fließen und beispielsweise durch die Durchtrittsöffnung 112 zur Wägetechnik fließen und diese verschmutzen können.

Wie in den Figuren 16 und 17 zu sehen ist, bilden die Seitenwangen 100 des Wägeraumbodens 34 abschnittsweise die Seitenwände 22 des Windschutzes 12. Da zwischen den Seitenwänden und dem Wägebodenabschnitt 98 somit kein Spalt vorhanden ist, können Flüssigkeiten oder Fremdkörper, die auf den Wägeraumboden 34 gelangt sind, nicht in das Gehäuse eindringen und die Wägetechnik verschmutzen.

Wie in den Figuren 17 und 18 zu sehen ist, kann neben den Seitenscheiben 26, dem Deckel 24 und dem Wägeraumboden 34 auch die Frontscheibe 18 aus den Halteelementen 40 und einer Halteschiene 116 entnommen werden. Die Halteelemente 40 sind dazu in vertikaler Richtung begrenzt federnd nachgiebig ausgebildet, so dass diese zur Entnahme der Frontscheibe 18 nach oben angehoben werden können.

Somit können annähernd alle Teile des Windschutzes 12 werkzeuglos demontiert werden, wodurch eine einfache Reinigung des Windschutzes 12 bzw. der Präzisionswaage 10 sowie ein einfacher Zugang zum Wägeraum 16 möglich sind.

Um die Scheiben, also die Deckscheibe 48, die Seitenscheibe 26 sowie die Frontscheibe 18 einfach reinigen zu können, können an den Scheiben vorhandene Bauteile, beispielsweise Griffe 118 oder die Haltevorrichtungen 84 ebenfalls einfach, vorzugsweise werkzeuglos, demontiert werden. Insbesondere können die Griffe 118 einfach an den Scheiben verrastet sein, wobei ein werkzeugloses Lösen dieser Verrastung möglich ist.

## Patentansprüche

1. Wägeraumboden (34) für einen Windschutz (12) einer Präzisionswaage (10), der einen Wägebodenabschnitt (98) sowie zwei senkrecht am Wägebodenabschnitt (98) angeordnete, an gegenüberliegenden Rändern (102) des Wägebodenabschnitts (98) angeordnete Seitenwangen (100) aufweist, die sich außerhalb des Windschutzes befinden, **dadurch gekennzeichnet, dass** an den Seitenwangen (100) Befestigungsvorrichtungen (106) vorgesehen sind, die als Rastelemente ausgeführt und auf einander zugewandten Innenflächen (104) der Seitenwangen (100) vorgesehen sind.

2. Wägeraumboden nachAnspruch 1, **dadurch gekennzeichnet, dass** am Wägebodenabschnitt (98) eine Durchtrittsöffnung (112) für eine Wägetechnik vorgesehen ist.

3. Wägeraumboden nach Anspruch 2, **dadurch gekennzeichnet, dass** der Wägebodenabschnitt (98) im Bereich der Durchtrittsöffnung (112) erhöht ist.

4. Wägeraumboden nach einem der vorhergehenden Ansprüche, **dadurch gekennzeichnet, dass** der Rand (110) des Wägebodenabschnitts (98) zumindest abschnittsweise erhöht ist.

5. Wägeraumboden nach einem der vorhergehenden Ansprüche, **dadurch gekennzeichnet, dass** an zumindest einer Seitenwange (100) eine Anschlagfläche (82) und/oder eine Führung für eine verschiebbare Seitenscheibe (26) vorgesehen ist.

6. Wägeraumboden nach Anspruch 5, **dadurch gekennzeichnet, dass** die Anschlagfläche (82) und/oder die Führung zumindest abschnittsweise durch eine senkrecht zum Wägebodenabschnitt (98) stehende Fläche der Seitenwange (100) gebildet ist.

7. Wägeraumboden nach einem der vorhergehenden Ansprüche, **dadurch gekennzeichnet, dass** der Wägeraumboden (34) einstückig aus Kunststoff hergestellt ist.

8. Windschutz (12) für eine Präzisionswaage (10) mit einem Wägeraumboden (34) nach einem der vorhergehenden Ansprüche und mit zumindest einer Seitenscheibe (26), die zwischen einer geöffneten Stellung und einer geschlossenen Stellung verschiebbar ist, wobei die Seitenwangen (100) des Wägeraumbodens (34) einen Abschnitt der Seitenwände (22) des Windschutzes (12) bilden.

9. Windschutz nach Anspruch 8, **dadurch gekennzeichnet, dass** die Seitenscheibe (26) dicht an einer Führung oder einer Anschlagfläche (82) anliegt, die an einer Seitenwange (100) vorgesehen ist.

10. Windschutz nach einem der Ansprüche 8 und 9, **dadurch gekennzeichnet, dass** der Windschutz (12) eine Führungsschiene (38) für die Seitenscheibe (26) aufweist, wobei die Seitenscheibe (26) mit einem oberen Rand (76) in der Führungsschiene (38) gelagert ist und mit einem unteren Rand (80) an einer Führung oder einer Anschlagfläche (82)des Wägeraumbodens (34) dicht anliegt.

11. Windschutz nach Anspruch 10, **dadurch gekennzeichnet, dass** die Anschlagfläche (82) oder die Führung in einer Draufsicht über die Führungsschiene (38) vorsteht.

12. Präzisionswaage (10) mit einem Gehäuse und einem Wägeraumboden (34) nach einem der Ansprüche 1 bis 7 oder einem Windschutz (12) nach einem der Ansprüche 8 bis 11, **dadurch gekennzeichnet, dass** die Seitenwangen (100) des Wägeraumbodens (34) einen Abschnitt der Seitenwände (22) des Gehäuses bilden.

## Claims

1. Weighing chamber base (34) for a draught shield (12) of a precision weighing machine (10), which comprises a weighing base section (98) as well as two side cheeks (100) which are arranged perpendicularly to the weighing base section (98) and at opposite edges (102) of the weighing base section (98) and which are disposed outside the draught shield, **characterised in that** securing devices (106) constructed as detent elements and disposed on mutually facing inner surfaces (104) of the side cheeks (100) are provided at the side cheeks (100).

2. Weighing chamber base according to claim 1, **characterised in that** a passage opening (112) for weighing means is provided at the weighing base section (98).

3. Weighing chamber base according to claim 2, **characterised in that** the weighing base section (98) is elevated in the area of the passage opening (112).

4. Weighing chamber base according to any one of the preceding claims, **characterised in that** the edge (110) of the weighing base section (98) is elevated at least in a region.

5. Weighing chamber base according to any one of the preceding claims, **characterised in that** an abutment surface (82) and/or a guide for a displaceable side pane (26) is or are provided at at least one side cheek (100).

6. Weighing chamber base according to claim 5, **characterised in that** the abutment surface (82) and/or the guide is or are formed at least in a region by a surface, which is perpendicular to the weighing base section (98), of the side cheek (100).

7. Weighing chamber base according to any one of the preceding claims, **characterised in that** the weighing chamber base (34) is produced integrally from plastics material.

8. Draught shield (12) for a precision weighing machine (10) with a weighing chamber base (34) according to any one of the preceding claims and with at least one side pane (26) which is displaceable between an open setting and a closed setting, wherein the side cheeks (100) of the weighing chamber base (34) form a section of the side walls (22) of the draught shield (12).

9. Draught shield according to claim 8, **characterised in that** the side pane (26) bears tightly against a guide or an abutment surface (82), which is provided at a side cheek (100).

10. Draught shield according to one of claims 8 and 9, **characterised in that** the draught shield (12) comprises a guide rail (38) for the side pane (26), wherein the side pane (26) is mounted by an upper edge (76) in the guide rail (38) and tightly bears by a lower edge (80) against a guide or an abutment surface (82) of the weighing chamber base (34).

11. Draught shield according to claim 10, **characterised in that** the abutment surface (82) or the guide protrudes in plan view beyond the guide rail (38).

12. Precision weighing machine (10) with a housing and a weighing chamber base (34) according to any one of claims 1 to 7 or a draught shield (12) according to any one of claims 8 to 11, **characterised in that** the side cheeks (100) of the weighing chamber base (34) form a section of the side walls (22) of the housing).

## Revendications

1. Fond de chambre de pesée (34) pour un paravent (12) d'une balance de précision (10), lequel comprend une partie de fond de pesée (98) ainsi que deux panneaux latéraux (100) agencés perpendiculairement sur la partie de fond de pesée (98) et agencés sur les bords (102) opposés de la partie de fond de pesée (98), lesquels panneaux se situent à l'extérieur du paravent, **caractérisé en ce que** des dispositifs de fixation (106), qui sont réalisés sous la forme d'éléments d'encliquetage et qui sont situés sur les surfaces intérieures (104) tournées les unes vers les autres des panneaux latéraux (100), sont prévus sur les panneaux latéraux (100).

2. Fond de chambre de pesée selon la revendication 1, **caractérisé en ce qu'**une ouverture de passage (112) pour un équipement technique de pesée est ménagée sur la partie de fond de pesée (98).

3. Fond de chambre de pesée selon la revendication 2, **caractérisé en ce que** la partie de fond de pesée (98) est surélevée dans la zone de l'ouverture de passage (112).

4. Fond de chambre de pesée selon l'une quelconque des revendications précédentes, **caractérisé en ce que** le bord (110) de la partie de fond de pesée (98) est surélevé au moins en partie.

5. Fond de chambre de pesée selon l'une quelconque des revendications précédentes, **caractérisé en ce qu'**une surface de butée (82) et/ou un guidage pour une vitre latérale (26) coulissante sont prévus sur au moins un panneau latéral (100).

6. Fond de chambre de pesée selon la revendication 5, **caractérisé en ce que** la surface de butée (82) et/ou le guidage sont formés au moins en partie par une surface, perpendiculaire à la partie de fond de pesée (98), du panneau latéral (100).

7. Fond de chambre de pesée selon l'une quelconque des revendications précédentes, **caractérisé en ce que** le fond de chambre de pesée (34) est réalisé d'une seule pièce en matière plastique.

8. Paravent (12) pour une balance de précision (10) comprenant un fond de chambre de pesée (34) selon l'une quelconque des revendications précédentes et au moins une vitre latérale (26) qui peut coulisser entre une position ouverte et une position fermée, dans lequel les panneaux latéraux (100) du fond de chambre de pesée (34) forment une partie des parois latérales (22) du paravent (12).

9. Paravent selon la revendication 8, **caractérisé en ce que** la vitre latérale (26) s'applique de manière étanche contre un guidage ou une surface de butée (82), qui est prévu(e) sur un panneau latéral (100).

10. Paravent selon l'une des revendications 8 et 9, **caractérisé en ce que** le paravent (12) comprend un rail de guidage (38) pour la vitre latérale (26), dans lequel la vitre latérale (26) est montée par un bord supérieur (76) dans le rail de guidage (38) et s'applique de manière étanche par un bord inférieur (80) contre un guidage ou une surface de butée (82) du fond de chambre de pesée (34).

11. Paravent selon la revendication 10, **caractérisé en ce que** la surface de butée (82) ou le guidage fait saillie du rail de guidage (38), en vue en élévation.

12. Balance de précision (10) comprenant un corps et un fond de balance de précision (34) selon l'une des revendications 1 à 7 ou un paravent (12) selon l'une des revendications 8 à 11, **caractérisée en ce que** les panneaux latéraux (100) du fond de balance de pesée (34) forment une partie des parois latérales (22) du corps.
